# EUROPÄISCHE PATENTANMELDUNG

(11) **EP 1 094 678 A1**
(43) Veröffentlichungstag der Anmeldung: **25.04.2001**
(21) Anmeldenummer: 99810963.1
(22) Anmeldetag: 22.10.1999
(51) Int. Cl.: H04Q 7/34

(54) **Verfahren zum Messen der Qualität von Roaming-Verbindungen und Anordnung zur Durchführung des Verfahrens**

(71) Anmelder: Ascom AG, 3000 Bern 14 (CH)
(72) Erfinder: Gorincanec, Orest, 6595 Riazzino (CH)
(74) Vertreter: Roshardt, Werner Alfred, Dipl.-Phys.

(57) **Zusammenfassung**

Bei einem Verfahren zum Messen der Qualität von Roaming-Verbindungen in einem Mobilnetz werden mittels wenigstens zweier Teststationen (12, 14, 16) je Testanrufe über das Mobilnetz erzeugt und/oder Testanrufe vom Mobilnetz empfangen. Die zur Durchführung der Testanrufe benötigten Daten von SIM-Cards werden von einer gemeinsamen SIM-Card-Servervorrichtung (10) aus an die Teststationen (12, 14, 16) übertragen. Die SIM-Card-Servervorrichtung (10) ist zur Aufnahme einer Vielzahl von SIM-Cards ausgebildet und in datenübertragender Funktion mit den wenigstens zwei Teststationen (12, 14, 16) verbunden. Das erfindungsgemässe Verfahren erfordert einen vergleichsweise geringen personellen und materiellen Aufwand zum Messen der Qualität von Roaming-Verbindungen in einem Mobilnetz.

## Beschreibung

### Technisches Gebiet

Die Erfindung bezieht sich auf das Gebiet der Telekommunikation und insbesondere auf das Roaming von Mobilteilnehmern. Sie betrifft ein Verfahren zum Messen der Qualität von Roaming-Verbindungen in einem Mobilnetz und eine Anordnung zur Durchführung des Verfahrens.

### Stand der Technik

Unter einem Mobilnetz ist im Zusammenhang mit der vorliegenden Beschreibung und den Patentansprüchen ein zellen- bzw. netzförmig aufgebautes Mobilfunksystem (z.B. ein GSM-System) zu verstehen. Der Betreiber eines Mobilnetzes wird als Provider bezeichnet und die zur Kommunikation in Mobilnetzen ausgebildeten Fernmeldeendgeräte (z.B. Handfunktelefone) als Mobilgeräte. In jeder Zelle eines Mobilnetzes kommunizieren die Mobilgeräte über eine Funkschnittstelle mit einer ortsfesten Basisstation. Mehrere Basisstationen sind jeweils über geeignete Fernmeldeverbindungen (z.B. über das drahtgebundene öffentliche Telefonnetz) mit einem Mobilschaltzentrum MSC (MSC = Mobile Switching Center) verbunden, welches das Mobilitäts-Management unterstützt. Ein Mobilnetz umfasst gewöhnlich eine Vielzahl von MSC's, die üblicherweise über ISDN-Anschlüsse (ISDN = Integrated Services Digital Network) mit dem öffentlichen Telefonnetz verbunden sind. Damit ein Mobilgerät zur Kommunikation in Mobilnetzen verwendet werden kann, muss es bei wenigstens einem Provider angemeldet sein. Es wird dann als Teilnehmer dieses Providers bezeichnet. Zur Identifikation der Teilnehmer wird in die bei einem Provider angemeldeten Mobilgeräte eine sogenannte SIM-Card (SIM = Subscriber Identity Module) des entsprechenden Providers eingesetzt, auf welcher teilnehmer- und providerspezifische Daten gespeichert sind.

Unter dem Begriff "Roaming" versteht man alle Vorkehrungen in Mobilnetzen, die es dem Benutzer eines Mobilgerätes (bzw. einem Teilnehmer) ermöglichen, sich aus dem Versorgungsgebiet des eigenen Home Location Registers HLR weg in ein anderes mobilfunkmässig erschlossenes Gebiet zu bewegen und von dort aus mit dem Mobilgerät Anrufe zu tätigen bzw. Anrufe zu empfangen. Ein Roaming findet u.a. dann statt, wenn ein Mobilgerät vom Sendegebiet eines Mobilnetzes in das Sendegebiet eines anderen Mobilnetzes bewegt wird und dort Anrufe tätigt oder empfängt. Als Roaming-Verbindung wird dann eine Telekommunikationsverbindung zu einem Teilnehmer in einem fremden Mobilnetz bezeichnet. Damit ein Teilnehmer auch andere Mobilnetze als dasjenige oder diejenigen seines Providers (bei dem er angemeldet ist) benutzen kann, müssen zwischen dem Netz, in welchem der Teilnehmer angemeldet ist und dem fremden Netz, das der Teilnehmer besucht, Daten ausgetauscht werden. Im Zuge des Datenaustauschs für das Roaming werden u.a. die für die Vermittlung von Anrufen und für die Verrechnung von Gesprächen notwendigen Daten übertragen. Dabei werden Daten zwischen einem sogenannten Home Location Register HLR des Providers, bei dem der Teilnehmer angemeldet ist, und einem Visitors Location Register VLR des Providers, in dessen Sendegebiet sich der Teilnehmer befindet und dessen Mobilnetz er benutzt, ausgetauscht.

Heutzutage haben die meisten Provider Roaming-Abkommen mit einer Vielzahl von anderen Providern abgeschlossen, damit das mobilfunkmässig ihren Teilnehmern erschlossene Gebiet möglichst gross ist. Für ein möglichst reibungsloses Funktionieren der Anrufvermittlung von oder zu Teilnehmern in fremden Netzen muss die Qualität von Roaming-Verbindungen regelmässig gemessen und bewertet werden. Zu diesem Zweck ist es üblich, dass sich jeder Provider von denjenigen Providern, mit denen er Roaming-Abkommen abgeschlossen hat, einige Teilnehmer (bzw. deren SIM-Cards) beschafft und in seinem Mobilnetz damit Testanrufe tätigt und Testanrufe empfängt. Zum Testen von Roaming-Verbindungen (auch als Roaming-Verification bezeichnet) wird u.a. auch die für einen Verbindungsaufbau benötigte Zeit gemessen.

Anfangs wurden zum Ausführen der Testanrufe eigentliche Mobilgeräte benutzt. Mittlerweile sind jedoch Testsysteme bekannt, in welche die SIM-Cards eingesteckt werden können und die einen Testanruf-Generator sowie einen Testanruf-Empfänger umfassen. Mit solchen Testsystemen können die Testanrufe unter Umgehung der Funk-Schnittstellen direkt über ISDN-Leitungen mit den MSC's abgewickelt werden, wobei in den MSC's Anrufe an und Anrufe von mit den SIM-Cards versehenen Teilnehmern simuliert werden. Dies schont einerseits die Funkresourcen und verhindert andrerseits Verzögerungen beim Verbindungsaufbau, die durch die Funk-Schnittstellen verursacht werden und im Zuge der Roaming-Verification nicht interessieren. Ein solches Testsystem wird von der Anmelderin der vorliegenden Patentanmeldung (der schweizerischen Firma ASCOM) seit einiger Zeit unter dem Namen ROMA vertrieben.

Testsysteme wie das oben erwähnte System ROMA ermöglichen zwar eine zuverlässige Überwachung der Qualität von Roaming-Verbindungen in einem Mobilnetz. Da für einen einigermassen vollständigen und statistisch ausgewogenen Überblick über die Roaming-Qualität eine Vielzahl von Testssystemen über das ganze Netz verteilt sein muss, ist der personelle und materielle Aufwand für die kontinuierliche Überwachung der Roaming-Qualität, den Unterhalt und die laufend erforderlichen Nachrüstungen der Testsysteme, um diese an die jeweils aktuelle Situation hinsichtlich von abgeschlossenen Roaming-Abkommen anzupassen, beträchtlich.

### Darstellung der Erfindung

Aufgabe der Erfindung ist die Angabe eines Verfahrens zum Messen der Qualität von Roaming-Verbindungen in einem Mobilnetz und einer Anordnung zur Durchführung des Verfahrens, welche einen vergleichsweise geringen personellen und materiellen Aufwand erfordern.

Die Lösung der Aufgabe ist durch die Merkmale der unabhängigen Patentansprüche definiert. Gemäss der Erfindung werden bei einem Verfahren zum Messen der Qualität von Roaming-Verbindungen in einem Mobilnetz mittels wenigstens zweier Teststationen je Testanrufe über das Mobilnetz erzeugt und/oder Testanrufe vom Mobilnetz empfangen. Die zur Durchführung der Testanrufe benötigten Daten von SIM-Cards (nachfolgend auch als SIM-Card-Daten bezeichnet) werden von einer gemeinsamen SIM-Card-Servervorrichtung aus an die Teststationen übertragen. Die SIM-Card-Servervorrichtung ist zur Aufnahme einer Vielzahl von SIM-Cards ausgebildet und in datenübertragender Funktion mit den wenigstens zwei Teststationen verbunden.

Die Erfindung ermöglicht, dass mehrere Teststationen zur Durchführung der Testanrufe eine SIM-Card gemeinsam benutzen können. Vorzugsweise gibt es für ein Mobilnetz bloss eine einzige SIM-Card-Servervorrichtung (nachfolgend auch als SIM-Card-Server bezeichnet), die mit sämtlichen für das Mobilnetz vorgesehenen Teststationen in datenübertragender Funktion verbunden ist. In diesem Fall muss ein Provider zur Durchführung der Roaming-Verification in seinem Mobilnetz von jedem anderen Provider, mit dem er ein Roaming-Abkommen abgeschlossen hat, im Prinzip bloss noch zwei SIM-Cards beschaffen, nämlich eine zur Simulation eines Anrufers und eine zur Simulation eines Angerufenen. Diese steckt er dann in eine Kartenaufnahmevorrichtung des SIM-Card-Servers ein und stellt sie dadurch sämtlichen Teststationen zur Durchführung der Roaming-Verification zur Verfügung. Im Vergleich zu bisher bekannten Testsystemen zur Durchführung der Roaming-Verification wird dadurch einerseits der materielle Aufwand vermindert, weil für jeden fremden Provider, für dessen SIM-Cards das Roaming geprüft werden soll, bloss noch Platz für zwei SIM-Cards in einer Kartenaufnahmevorrichtung erforderlich ist. Andrerseits wird auch der personelle Aufwand bzw. der Arbeitsaufwand zur Durchführung der Roaming-Verfication vermindert, weil sich das Nachführen der SIM-Cards auf zwei SIM-Cards pro fremden Provider beschränkt. Ein solches Nachführen ist z.B. nötig, wenn Roaming-Abkommen neu abgeschlossen oder bestehende verändert werden, wenn neue Dienste hinzukommen, die von bisherigen SIM-Cards nicht unterstützt wurden, usw.

Vorzugsweise ist die SIM-Card-Servervorrichtung über ein Wide-Area-Network WAN (z.B.ISDN, X25, Modem-Verbindungen o.ä.) und/oder ein Local-Area-Network LAN (z.B. Ethernet, Token-Ring o.ä.) mit den wenigstens zwei Teststationen verbunden. Die SIM-Card-Servervorrichtung kann jedoch im Prinzip auch über das analoge öffentliche Telefonnetz POTS (Plain Old Telephone Service) mit den Teststationen verbunden sein. Vorteilhafterweise beträgt die Übertragungskapazität der Fernmeldeverbindung zwischen einer Teststation und der SIM-Card-Servervorrichtung je ungefähr 36 Kbit/s. Es versteht sich von selbst, dass sowohl die Teststationen als auch die SIM-Card-Servervorrichtung mit Telekommunikationsschnittstellen (Interfaces) ausgerüstet sein müssen, die dem Telekommunikationsnetz entsprechen, an welches sie angeschlossen sind. Gemäss dem Vorangehenden kommen als Interfaces demnach z.B. ISDN-Basisanschlüsse, POTS-Anschlüsse (d.h. a/b-Schnittstellen) o.ä. in Frage.

Gemäss einer bevorzugten Ausführungsart der Erfindung umfasst eine Anordnung zur Durchführung der Roaming-Verification bloss eine einzige SIM-Card-Servervorrichtung, die dann als zentraler SIM-Card-Server bezeichnet wird. Es sind jedoch auch andere erfindungsgemässe Roaming-Verification-Anordnungen mit mehr als einem SIM-Card-Server möglich.

Die Distanz zwischen einer Teststation und einem SIM-Card-Server einer erfindungsgemässen Anordnung kann weniger als ein Meter, einige Meter, einige hundert Meter, einige Kilometer, ungefähr 15 Kilometer, mehr als ungefähr 15 Kilometer oder sogar einige hundert Kilometer betragen.

Vorzugsweise umfasst eine erfindungsgemässe Roaming-Verification-Anordnung weiter wenigstens eine Bedienungsstation, die über eine Telekommunikationsverbindung mit den Teststationen verbindbar und zur Steuerung derselben ausgebildet ist. Die Bedienungsstation kann über ein WAN (z.B. ISDN, X25, Modem-Verbindungen o.ä.), ein LAN (z.B. Ethernet, Token-Ring o.ä.) und/oder das POTS mit den Teststationen verbunden sein. Vorteilhafterweise beträgt die Übertragungskapazität der Fernmeldeverbindung zwischen einer Teststation und der Bedienungsstation je ungefähr 36 Kbit/s. Es versteht sich von selbst, dass sowohl die Teststationen als auch die SIM-Card-Servervorrichtung mit Telekommunikationsschnittstellen (Interfaces) ausgerüstet sein müssen, die dem Telekommunikationsnetz entsprechen, an welches sie angeschlossen sind. Gemäss dem Vorangehenden kommen als Interfaces z.B. ISDN-Basisanschlüsse, POTS-Anschlüsse o.ä. in Frage. Für eine erfindungsgemässe Roaming-Verification-Anordnung können bloss eine einzige oder aber auch mehrere Bedienungsstationen vorgesehen sein.

Eine für eine erfindungsgemässe Roaming-Verification-Anordnung geeignete Teststation zeichnet sich dadurch aus, dass sie mit einem Testanruf-Generator (d.h. einer Einrichtung zum Erzeugen von Testanrufen über das Mobilnetz, in dem die Roaming-Verification durchzuführen ist) versehen ist, eine zum Weiterleiten der vom Testanruf-Generator erzeugten Testanrufe an wenigstens ein Mobilschaltzentrum MSC des Mobilnetzes ausgebildete Telekommunikationsschnittstelle aufweist und eine Telekommunikationsschnittstelle umfasst, die zum Empfangen der zum Erzeugen der Testanrufe erforderlichen Daten von SIM-Cards ausgebildet ist.

Für die Durchführung der Testanrufe kann die Teststation über ein Cross Connect Network CC (auch als Crossconnector-System bezeichnet), über ISDN-Wählleitungen oder über andere geeignete Fernmeldeverbindungen mit einem oder einer Vielzahl von MSC's des Mobilnetzes verbunden sein. Im Falle eines Cross Connect Networks CC kann das ISDN als Datenträger verwendet werden. Für die Datenübertragung von und zu den MSC's ist die Teststation mit einer oder mehreren Telekommunikationsschnittstellen (Interfaces) ausgerüstet. Diese können z.B. ISDN-Primäranschlüsse, ISDN-Basisanschlüsse, a/b-Schnittstellen o.ä. Schnittstellen umfassen. Vorzugsweise beträgt die Übertragungskapazität der zur Durchführung der Testanrufe vorgesehenen Interfaces einer Teststation ungefähr 2 Mbit/s. Dadurch wird die Möglichkeit geschaffen, die Teststation gleichzeitig mit bis zu 30 MSC's zu verbinden. Es können jedoch auch Interfaces mit einer grösseren oder einer kleineren Übertragungskapazität vorgesehen sein.

Die zum Empfangen der SIM-Card-Daten ausgebildete Telekommunikationsschnittstelle der Teststation kann die SIM-Card-Daten vorzugsweise über ein WAN (z.B. ISDN, X25, Modem-Verbindungen o.ä.), ein LAN (z.B. Ethernet, Token-Ring o.ä.) und/oder das POTS empfangen. Die entsprechende Telekommunikationsschnittstelle der Teststation kann z.B. einen ISDN-Basisanschluss, einen POTS-Anschluss o.ä. umfassen. Vorteilhafterweise beträgt die Übertragungskapazität dieser Telekommunikationsschnittstelle ungefähr 36 Kbit/s. Diese Telekommunikationsschnittstelle kann gleichzeitig auch zum Empfangen von Daten ausgebildet sein, die von einer Bedienungsstation zum Steuern der Teststation an die Teststation übertragen werden. Es ist jedoch auch möglich, zum Empfangen der Steuerdaten von der Bedienungsstation eine separate Telekommunikationsschnittstelle an der Teststation vorzusehen.

Gemäss einer bevorzugten Ausführungsart der Erfindung umfasst die mit dem Testanruf-Generator versehene Teststation zusätzlich auch eine Telekommunikationsschnittstelle und einen Testanruf-Empfänger (d.h. eine Einrichtung zum Empfangen von Testanrufen), die ausgebildet sind, um Testanrufe direkt von wenigstens einem Mobilschaltzentrum MSC des Mobilnetzes zu empfangen. Zum Empfangen der Testanrufe von den MSC's können entweder dieselben Schnittstellen der Teststation verwendet werden wie zum Weiterleiten der vom Testanruf-Generator erzeugten Testanrufe an die MSC's, oder es können separate Telekommunikationsschnittstellen zum Empfangen der Testanrufe vorgesehen sein.

Es können jedoch auch unterschiedliche Teststationen zum Erzeugen von Testanrufen einerseits und zum Empfangen von Testanrufen andrerseits vorgesehen sein.

Ein für eine erfindungsgemässe Roaming-Verification-Anordnung geeigneter SIM-Card-Server zeichnet sich dadurch aus, dass er mit einer Kartenaufnahmevorrichtung zur Aufnahme einer Vielzahl von SIM-Cards versehen ist und eine Telekommunikationsschnittstelle umfasst, die zum Übertragen der zum Erzeugen von Testanrufen erforderlichen SIM-Card-Daten an wenigstens zwei, vorzugsweise jedoch an eine Vielzahl von Teststationen ausgebildet ist. Die zum Übertragen der SIM-Card-Daten ausgebildete Telekommunikationsschnittstelle des SIM-Card-Servers kann die SIM-Card-Daten vorzugsweise über ein WAN (z.B. ISDN, X25, Modem-Verbindungen o.ä.), ein LAN (z.B. Ethernet, Token-Ring o.ä.) und/oder das POTS übertragen. Die entsprechende Telekommunikationsschnittstelle des SIM-Card-Servers kann z.B. einen ISDN-Basisanschluss, einen POTS-Anschluss o.ä. umfassen. Vorteilhafterweise beträgt die Übertragungskapazität dieser Telekommunikationsschnittstelle ungefähr 36 Kbit/s.

Die Kartenaufnahmevorrichtung des SIM-Card-Servers kann mehrere je zur Aufnahme einer Viehlzahl von SIM-Cards ausgebildete Untereinheiten umfassen, die untereinander mittels wenigstens eines RS-422 Busses verbunden sein können.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnung

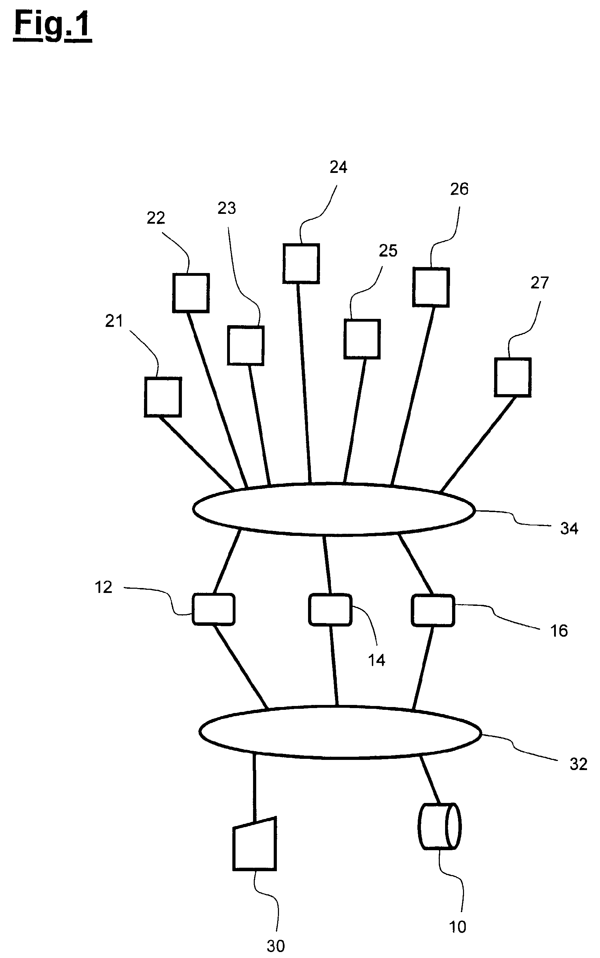

Die einzige zur Erläuterung des Ausführungsbeispiels verwendete Zeichnung Fig. 1 zeigt in vereinfachter, schematischer Form eine Anordnung zur Durchführung des Verfahrens gemäss der Erfindung.

### Wege zur Ausführung der Erfindung

Die in Fig. 1 in vereinfachter schematischer Form dargestellte Anordnung zum Messen der Qualität von Roaming-Verbindungen (d.h. zur Durchführung einer Roaming-Verification) in einem Mobilnetz umfasst drei Teststationen 12, 14, 16, einen SIM-Card-Server 10 und eine Bedienungsstation 30.

Die Teststationen 12, 14, 16 sind über ein Cross Connect Network 34, welches das ISDN als Datenträger verwendet, in datenübertragender Funktion mit den verschiedenen MSC's 21, 22, 23, 24, 25, 26, 27 des Mobilnetzes verbunden, in welchem die Roaming-Verification durchzuführen ist. Die Teststationen 12, 14, 16 sind weiter über ein auf dem ISDN basierenden WAN 32 in datenübertragender Funktion einerseits mit dem SIM-Card-Server 10 und andererseits mit der Bedienungsstation 30 verbunden.

Die Hardware jeder der drei Teststationen 12, 14, 16 besteht im Wesentlichen aus einem handelsüblichen PC (Personalcomputer), der mit mehreren Telekommunikationsschnittstellen bzw. Interfaces ausgerüstet ist. Damit die Teststationen 12, 14, 16 an verschiedene Telekommunikationsnetze angeschlossen werden können, sind sowohl zum Anschliessen an das ISDN geeignete Interfaces als auch zum Anschliessen an das gewöhnliche öffentliche Telefonnetz POTS geeignete Interfaces vorgesehen. Zudem ist jede der drei Teststationen 12, 14, 16 je mit einem softwaremässig auf dem PC implementierten Testanruf-Generator zum Erzeugen von Testanrufen und mit einem mit einem softwaremässig auf dem PC implementierten Testanruf-Empfänger zum Empfangen von Testanrufen versehen.

Zur Herstellung von Telekommunikationsverbindungen über das Cross Connect Network 34 zu den verschiedenen MSC's 21, 22, 23, 24, 25, 26, 27 des Mobilnetzes ist jede Teststation 12, 14, 16 mit zwei ISDN-Primäranschlüssen mit einer Übertragungskapazität von je 2 Mbit/s, zwei ISDN-Basisanschlüssen mit einer Übertragungskapazität von je 64 Kbit/s und zwei POTS-Anschlüssen (d.h. a/b-Schnittstellen, wie sie für das Public Switched Telecommunication Network PSTN gebräuchlich sind) mit einer Übertragungskapazität von je 36 Kbit/s ausgerüstet. Bei dem in Fig. 1 dargestellten Ausführungsbeispiel der Erfindung dienen die zwei ISDN-Primäranschlüsse dazu, um die vom Testanruf-Generator erzeugten Testanrufe über das Cross Connect Network 34 an die MSC's 21, 22, 23, 24, 25, 26, 27 zu übertragen, während die beiden an das Cross Connect Network 34 angeschlossenen ISDN-Basisanschlüsse zum Empfangen der Testanrufe von den MSC's 21, 22, 23, 24, 25, 26, 27 dienen.

Jede der Teststationen 12, 14, 16 ist zudem je mit einem weiteren ISDN-Basisanschluss versehen, der an das WAN 32 angeschlossen ist. Die an das WAN 32 angeschlossenen ISDN-Basisanschlüsse der Teststationen 12, 14, 16 dienen einerseits dazu, um über das WAN 32 vom SIM-Card-Server 10 die zum Erzeugen der Testanrufe erforderlichen SIM-Card-Daten zu empfangen. Andererseits dienen die an das WAN 32 angeschlossenen ISDN-Basisanschlüsse der Teststationen 12, 14, 16 dazu, um über das WAN 32 von der Bedienungsstation 30 Daten zur Steuerung der Teststationen 12, 14, 16 zu empfangen.

Die Bedienungsstation 30 besteht im Wesentlichen aus einem handelsüblichen, mit einer Tastatur und einem Bildschirm versehenen PC, der über einen ISDN-Basisanschluss an das WAN 32 angeschlossen ist. An der Bedienungsstation 30 geben Messingenieure die Steuerungsdaten für die Durchführung der Roaming-Verification ein und übermitteln sie in Form von Steuerungsaufträgen an die Teststationen 12, 14, 16.

Der SIM-Card-Server 10 umfasst eine Kartenaufnahmevorrichtung, die zur Aufnahme einer Vielzahl von SIM-Cards ausgebildet ist, sowie eine Steuerungseinheit in Form eines industrieüblichen PC's zur Steuerung des SIM-Card-Servers 10. Die Steuerungseinheit und somit der SIM-Card-Server 10 sind über einen ISDN-Basisanschluss an das WAN 32 angeschlossen, damit vom SIM-Card-Server 10 aus über das WAN 32 die zur Durchführung von Testanrufen erforderlichen SIM-Card-Daten an die Teststationen 12, 14, 16 übertragen werden können.

Bei der in Fig. 1 dargestellten Ausführungsart der Erfindung umfasst die Kartenaufnahmevorrichtung des SIM-Card-Servers 10 Untereinheiten in Form von sogenannten SIM-Card-Arrays. Mittels eines RS-422 Busses sind jeweils acht SIM-Card-Arrays untereinander und mit der Steuerungseinheit des SIM-Card-Servers 10 verbunden. Jeder SIM-Card-Array ist eine Hardware-Einheit in Form eines 19"-Einschubs. Er kann zwischen einem und fünfzehn sogenannte SIM-Card-Boards enthalten, von denen jedes wiederum sechzehn SIM-Cards aufnehmen kann. An der Steuerungseinheit des SIM-Card-Servers 10 sind acht voneinander unabhängige RS-422 Busse nach Art einer sogenannten RS-422 Daisy Chain angeschlossen, sodass insgesamt 15360 SIM-Cards simultan benutzt werden können.

Die Bedienungsstation 30 und der SIM-Card-Server 10 sind vorzugsweise am gleichen Ort aufgestellt, damit z.B. nach dem Abschluss von neuen Roaming-Abkommen ein Messingenieur an einem Ort einerseits neue SIM-Cards in den SIM-Card-Server 10 einsetzen kann und andrerseits am gleichen Ort an der Bedienungsstation 30 eine neue Abfolge von Messungen zusammenstellen und als Messaufträge an die Teststationen 12, 14, 16 übermitteln kann.

Um in dem die MSC's 21, 22, 23, 24, 25, 26, 27 umfassenden Mobilnetz eine Roaming-Verification durchzuführen, werden zunächst die SIM-Cards von anderen Providern, zu denen ein Roaming-Abkommen besteht, in die Kartenaufnahmevorrichtung des SIM-Card-Servers 10 eingesetzt. Danach werden an der Bedienungsstation 30 die Steuerungsdaten für die Durchführung der Roaming-Verification eingegeben und in Form von Steuerungsaufträgen über das WAN 32 an die Teststationen 12, 14, 16 übermittelt. In Abhängigkeit dieser Steuerungsdaten werden sodann an den Teststationen 12, 14, 16 durch die Testanruf-Generatoren der Teststationen 12, 14, 16 Testanrufe erzeugt, wobei die für die Durchführung der Testanrufe erforderlichen SIM-Card-Daten über das WAN 32 an die Teststationen 12, 14, 16 übertragen werden. Als nächstes werden die von den Testanruf-Generatoren erzeugten Testanrufe über das Cross Connect Network 34 an die MSC's 21, 22, 23, 24, 25, 26, 27 des Mobilnetzes übertragen. Danach werden die Testanrufe im Mobilnetz analog wie Anrufe zwischen gewöhnlichen Mobilteilnehmer ausgeführt, wobei für jeden Testanruf jeweils eine Verbindung zwischen einem MSC, in dessen VLR ein anrufender Mobilteilnehmer aufgeführt ist, und einem MSC, in dessen VLR ein angerufener Mobilteilnehmer aufgeführt ist, aufgebaut wird. Die an den MSC's 21, 22, 23, 24, 25, 26, 27 empfangenen Testanrufe werden sodann über das Cross Connect Network 34 an die Teststationen 12, 14, 16 bzw. deren Testanruf-Empfänger weitergeleitet. An den Teststationen 12, 14, 16 werden die für die Durchführung der Roaming-Verification relevanten Daten gemessen (z.B. die Zeit für den Verbindungsaufbau). Anschliessend werden die gemessenen Daten an eine zur Auswertung und Speicherung dieser Daten vorgesehene Zentrale übertragen. Diese Datenauswertungszentrale kann z.B. mit der Bedienungsstation 30 identisch sein.

Zusammenfassend ist festzustellen, dass durch die Erfindung ein Verfahren zum Messen der Qualität von Roaming-Verbindungen in einem Mobilnetz und eine Anordnung zur Durchführung des Verfahrens bereitgestellt werden, welche einen vergleichsweise geringen personellen und materiellen Aufwand erfordern.

## Patentansprüche

1. Verfahren zum Messen der Qualität von Roaming-Verbindungen in einem Mobilnetz, wobei mittels wenigstens zweier Teststationen (12, 14, 16) je Testanrufe über das Mobilnetz erzeugt und/oder Testanrufe vom Mobilnetz empfangen werden, dadurch gekennzeichnet, dass die zur Durchführung der Testanrufe benötigten Daten von SIM-Cards von einer gemeinsamen SIM-Card-Servervorrichtung (10) aus an die Teststationen (12, 14, 16) übertragen werden.

2. Anordnung zur Durchführung des Verfahrens nach Anspruch 1, mit wenigstens zwei Teststationen (12, 14, 16), die zum Erzeugen von Testanrufen über das Mobilnetz und/oder zum Empfangen von Testanrufen vom Mobilnetz ausgebildet sind, dadurch gekennzeichnet, dass die Anordnung weiter eine SIM-Card-Servervorrichtung (10) umfasst, welche zur Aufnahme einer Vielzahl von SIM-Cards ausgebildet ist und in datenübertragender Funktion mit den wenigstens zwei Teststationen (12, 14, 16) verbunden ist.

3. Anordnung nach Anspruch 3, dadurch gekennzeichnet, dass die SIM-Card-Servervorrichtung (10) über ein Wide-Area-Network WAN (32) und/oder ein Local-Area-Network LAN mit den wenigstens zwei Teststationen (12, 14, 16) verbunden ist.

4. Anordnung nach einem der Ansprüche 2 oder 3, dadurch gekennzeichnet, dass sie bloss eine einzige SIM-Card-Servervorrichtung (10) umfasst.

5. Anordnung nach einem der Ansprüche 2 bis 4, dadurch gekennzeichnet, dass wenigstens eine Teststation (12, 14, 16) in einer Entfernung von mehr als 15 km von der SIM-Card-Servervorrichtung (10) angeordnet ist.

6. Anordnung nach einem der Ansprüche 2 bis 5, dadurch gekennzeichnet, dass sie weiter wenigstens eine Bedienungsstation (30) umfasst, die über eine Telekommunikationsverbindung mit den wenigstens zwei Teststationen (12, 14, 16) verbindbar und zur Steuerung derselben ausgebildet ist.

7. Teststation (12, 14, 16) für Anordnung nach einem der Ansprüche 2 bis 6, dadurch gekennzeichnet, dass sie mit einem Testanruf-Generator zum Erzeugen von Testanrufen versehen ist, eine Telekommunikationsschnittstelle aufweist, die ausgebildet ist, um die vom Testanruf-Generator erzeugten Testanrufe an wenigstens ein Mobilschaltzentrum MSC (21 - 27) des Mobilnetzes weiterzuleiten, und eine Telekommunikationsschnittstelle umfasst, die zum Empfangen der Daten von SIM-Cards über ein Wide-Area-Network WAN (32) und/oder ein Local-Area-Network LAN ausgebildet ist.

8. Teststation (12, 14, 16) nach Anspruch 7, dadurch gekennzeichnet, dass sie eine Telekommunikationsschnittstelle und einen Testanruf-Empfänger umfasst, die ausgebildet sind, um Testanrufe direkt von wenigstens einem Mobilschaltzentrum MSC (21 - 27) des Mobilnetzes zu empfangen.

9. SIM-Card-Servervorrichtung (10) für Anordnung nach einem der Ansprüche 2 bis 6, dadurch gekennnzeichnet, dass sie mit einer Kartenaufnahmevorrichtung zur Aufnahme einer Vielzahl von SIM-Cards versehen ist und eine Telekommunikationsschnittstelle umfasst, die zum Übertragen der Daten der in der Kartenaufnahmevorrichtung aufgenommenen SIM-Cards über ein Wide-Area-Network WAN (32) und/oder ein Local-Area-Network LAN ausgebildet ist.

10. SIM-Card-Servervorrichtung nach Anspruch 9, dadurch gekennzeichnet, dass die Kartenaufnahmevorrichtung mehrere je zur Aufnahme einer Viehlzahl von SIM-Cards ausgebildete Untereinheiten umfasst, die untereinander mittels wenigstens eines RS-422 Busses verbunden sind.
